# FASCICULE DE BREVET EUROPEEN

(11) **EP 0 468 079 B1**
(45) Date de publication et mention de la délivrance du brevet: **18.09.1996**
(21) Numéro de dépôt: 90114404.8
(22) Date de dépôt: 27.07.1990
(51) Int. Cl.: B65D 81/00, A47J 31/40

(54) **Cartouche fermée pour la confection d'une boisson, son procédé et son dispositif de fabrication**
Geschlossene Patrone zur Zubereitung eines Getränkes sowie Verfahren und Einrichtung zur Herstellung derselben
Closed cartridge for making a beverage, process and device for manufacturing such a cartridge

(43) Date de publication de la demande: 29.01.1992
(73) Titulaire: SOCIETE DES PRODUITS NESTLE S.A., CH-1800 Vevey (CH)
(72) Inventeur: Fond, Olivier, CH-1400 Yverdon (CH); Masek, Petr, CH-1400 Yverdon (CH)

(56) Documents cités:
- EP-A- 0 211 511
- EP-A- 0 309 708
- CH-A- 605 293
- DE-U- 8 619 012
- FR-A- 2 211 924
- GB-A- 2 023 086
- GB-A- 2 103 569
- US-A- 2 778 739
- US-A- 4 257 530

## Description

L'invention concerne une cartouche fermée, prévue pour être extraite sous pression, contenant une substance pour la préparation d'une boisson, comprenant une coupelle avec paroi latérale ayant sensiblement la forme d'un tronc de cône, avec une face inférieure plane avec épaulement et avec un rebord supérieur de diamètre supérieur à la face inférieure, un filtre soudé sur l'épaulement de la face inférieure et décollé de ladite face inférieure et un opercule soudé sur le rebord supérieur de la coupelle.

L'utilisation de capsules de café, surtout dans le domaine des cafés type expresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s'ouvrant sous l'effet de la pression d'eau injectée, répondent plus complètement aux arguments énoncés ci-dessus. Ces capsules se distinguent par leur système d'ouverture.

Celles faisant l'objet du brevet CH 605 293 présentent des zones affaiblies qui se déchirent préférentiellement sous l'effet de la pression. Cette solution présente le désavantage d'augmenter la complexité et le prix de la capsule car les matières employées doivent être traitées de manière très précise pour que l'ouverture soit correcte et reproductible. La présence de zones affaiblies est également mentionnée dans les brevets GB 2023086, qui décrit une cartouche selon le préambule de la revendication 1, et FR 2211924. Dans le brevet US 2778739 il faut un élément dynamique pour percer la capsule. Dans ces trois cas, il n'y a pas de forte montée en pression lors de l'extraction.

La cartouche, objet de la présente invention, est d'un prix plus faible et sa fabrication est beaucoup plus aisée, tout en permettant d'avoir une cartouche pour la confection d'un café espresso, c'est-à-dire dans laquelle on effectue une extraction du café sous une pression comprise entre 2 et 20 bars.

L'invention concerne une cartouche fermée, dans laquelle le rebord supérieur de la coupelle a un diamètre supérieur a celui de l'opercule, la partie du rebord qui dépasse radialement du rebord de l'opercule étant rabattue vers le bas pour former un cordon annulaire.

Par décollée, on entend que le filtre et la face inférieure ne sont pas en contact et sont séparés d'une distance de l'ordre du mm. Cette séparation permet la formation, lors de l'extraction de la cartouche, d'une chambre collectrice qui augmente de volume, lors de la montée en pression dans la capsule, permettant une bonne évacuation de l'extrait de café, favorisant ainsi une bonne extraction. Le filtre et la face inférieure sont en contact seulement sur le bord dudit filtre et de ladite face inférieure.

Par tronc de cône, on entend aussi bien tronconique au sens strict, que tronc d'ellipsoïde, tronc de sphère ou même cylindrique.

La cartouche selon l'invention, peut être extraite selon le procédé et avec le dispositif faisant l'objet de la demande de brevet européen No. 0468078.

Le cordon annulaire, rabattu vers le bas, permet d'assurer une bonne étanchéité par son écrasement, lors de son extraction, entre un porte-cartouches et un dispositif d'extraction.

La cartouche est remplie d'une substance pour la préparation d'une boisson. Cette substance est de préférence du café torréfié et moulu, mais peut-être aussi du thé, du café soluble, un mélange de café moulu et de café soluble ou un produit chocolaté.

La cartouche selon l'invention est en aluminium ou en plastique compatible dans le domaine alimentaire. Si on utilise de l'aluminium, la paroi de la coupelle a une épaisseur comprise entre 50 et 120 µm, de préférence entre 70 et 80 µm. Dans le cas du plastique, on a des épaisseurs de 300 à 500 µm.

Le filtre devant résister à une forte variation de pression, il est prévu qu'il ait une épaisseur supérieure à celle de la coupelle, à savoir de l'ordre de 100 à 300 µm, de préférence de l'ordre de 200 µm, s'il est en aluminium et de 300 à 1000 µm, s'il est en plastique. On utilise par exemple le filtre faisant l'objet du brevet EP 309 708.

La cartouche selon l'invention peut être de taille variable suivant le volume du café que l'on souhaite préparer. La dose de café contenue peut varier entre 5 et 20g, le diamètre de la cartouche est compris entre 2,5 et 6 cm et l'épaisseur du lit de café entre 10 et 25 mm.

Dans la cartouche selon l'invention, le filtre est soudé sur la face inférieure, en particulier dans le cas d'une cartouche tout en aluminium. Le soudage se fait par thermosoudage, les parties à souder comportant sur leurs faces en regard une laque de soudage. La bordure de soudage est comprise entre 1 et 3,5 mm de largeur, quelle que soit le diamètre de la cartouche, de manière à obtenir une cartouche résistant bien à des pressions allant jusqu'à 20 bars. La face inférieure est décollée du filtre pour éviter aussi la soudure du filtre sur toute la surface.

Dans le cas de l'utilisation d'un matériau en aluminium la coupelle est formée par emboutissage et dans le cas de plastique, elle est formée par injection ou thermoformage. Pour faciliter l'ouverture de la cartouche lors de l'extraction, on peut également prévoir sur la zone centrale de la face inférieure une zone d'affaiblissement ou alors sur cette zone centrale une ouverture sur laquelle est soudée une fermeture.

On dispose ainsi selon l'invention d'une cartouche résistant à des pressions élevées lors de l'extraction et permettant d'obtenir un café avec toutes les caractéristiques d'un espresso.

L'invention concerne en outre le procédé de fabrication de ces capsules (ou cartouches), tel que défini dans la revendication 5, On part d'une coupelle déjà formée, soit en aluminium, soit en plastique, on y dépose et soude le filtre sur l'épaulement de la face inférieure de la coupelle dont le rebord supérieur a un diamètre supérieur à celui de l'opercule, la partie du rebord qui dépasse radialement du diamètre de l'opercule étant rabattue vers le bas, on remplit la coupelle de café torréfié et moulu, on le tasse, et on soude l'opercule sur le rebord supérieur de ladite coupelle. Le soudage du filtre se fait par thermosoudage dans le cas de cartouche en aluminium et par thermosoudage ou soudage par ultrasons dans le cas de cartouches en plastique. Après le remplissage de la coupelle, on peut aussi prévoir une étape de nettoyage de son rebord supérieur avant mise en place de l'opercule. Les capsules passent d'une station à l'autre par un système d'avance pas à pas, dans un mouvement linéaire ou circulaire selon la construction de la machine. Les filtres déposés dans le fond de la coupelle sont préparés sur une voie parallèle ou perpendiculaire. On les prépare par perçage des trous sur une bande défilante d'aluminium ou de plastique, puis on découpe le filtre à partir de ladite bande. Le remplissage de la coupelle avec le café se fait sous atmosphère de gaz neutre: par exemple azote, CO₂.

On peut envisager ce procédé en une seule étape sur une ligne de fabrication, mais on peut également le prévoir en deux étapes : préparation de la coupelle avec le filtre puis remplissage de café et operculage.

L'invention concerne finalement le dispositif pour la mise en oeuvre de ce procédé. Ce dispositif comprend un outil de perçage et un outil de découpe du filtre à partir d'une bande d'aluminium, ledit outil de découpe servant aussi pour la pose et le soudage du filtre sur l'épaulement de la paroi inférieure de la coupelle défilant directement en-dessous dudit outil de découpe, un poste de dosage et de tassage du café torréfié et moulu, un poste de soudage de l'opercule sur la face supérieure de la coupelle, qui a un diamètre supérieur à celui de l'opercule, et en amont de l'outil de soudage du filtre, un système de pliage du cordon annulaire sur la partie du rebord de la coupelle qui dépasse radialement du rebord de l'opercule.

Les machines réalisant ces opérations peuvent être construites avec des stations disposées soit en ligne soit autour d'une table rotative.

Comme mentionné déjà ci-dessus, la coupelle est mue d'un poste à l'autre, par un système d'avance pas à pas.

Le dispositif comprend en outre en aval du poste de dosage et de tassage du café un système de nettoyage du rebord supérieur de la coupelle. Ce nettoyage se fait avantageusement par succion ou par balayage.

La suite de la description est faite en référence aux dessins sur lesquels :

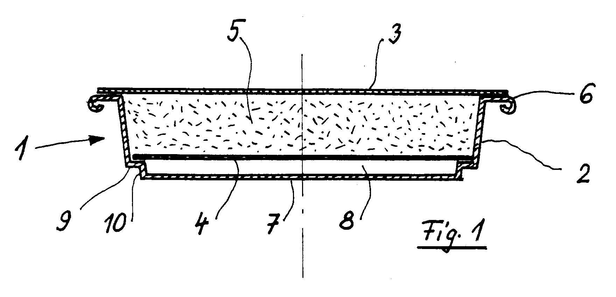

Fig. 1 est une représentation schématique de la cartouche selon l'invention,
Fig. 2 et 3
sont des représentations schématiques du dispositif de fabrication des capsules selon l'invention.

La cartouche (1) comporte une coupelle (2) avec une paroi de forme tronconique dans laquelle est soudée un filtre (4). Sur le filtre, on dispose le café torréfié et moulu (5) à extraire. On ferme la cartouche avec un opercule (3) formant la face supérieure. Le rebord supérieur (6) de la coupelle comporte un cordon annulaire rabattu vers le bas qui permet un bon maintien de la cartouche dans son système d'extraction. La face inférieure (7) n'est pas en contact direct avec le filtre (4) et crée une chambre collectrice (8) assurant une bonne extraction du café. Le filtre (4) est soudé sur la face inférieure (7) sur l'épaulement (9) de ladite face (7). L'épaulement (10) sépare bien le filtre de la face (7).

La cartouche de la Fig. 1 est en aluminium ou en plastique.

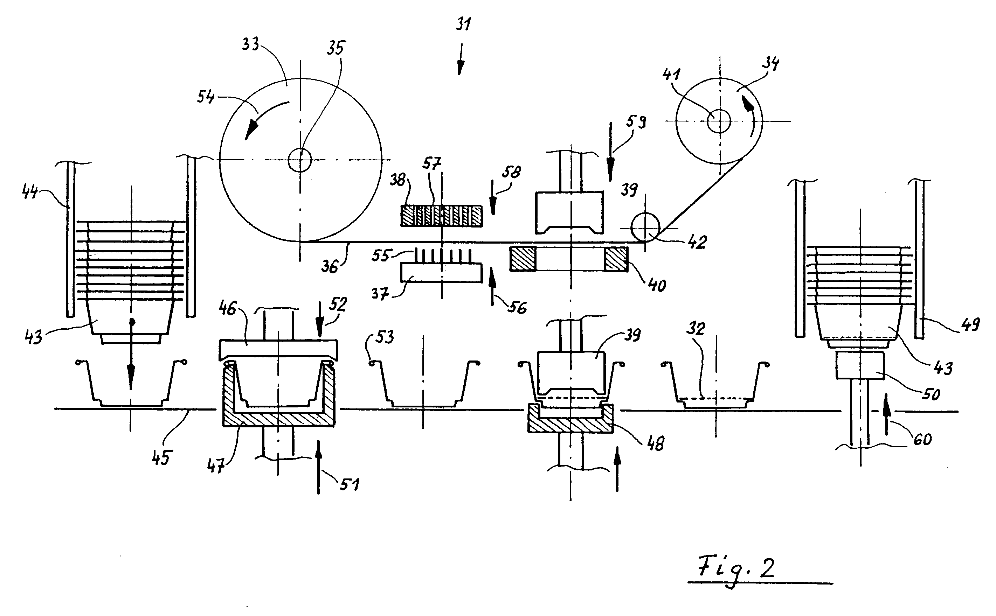

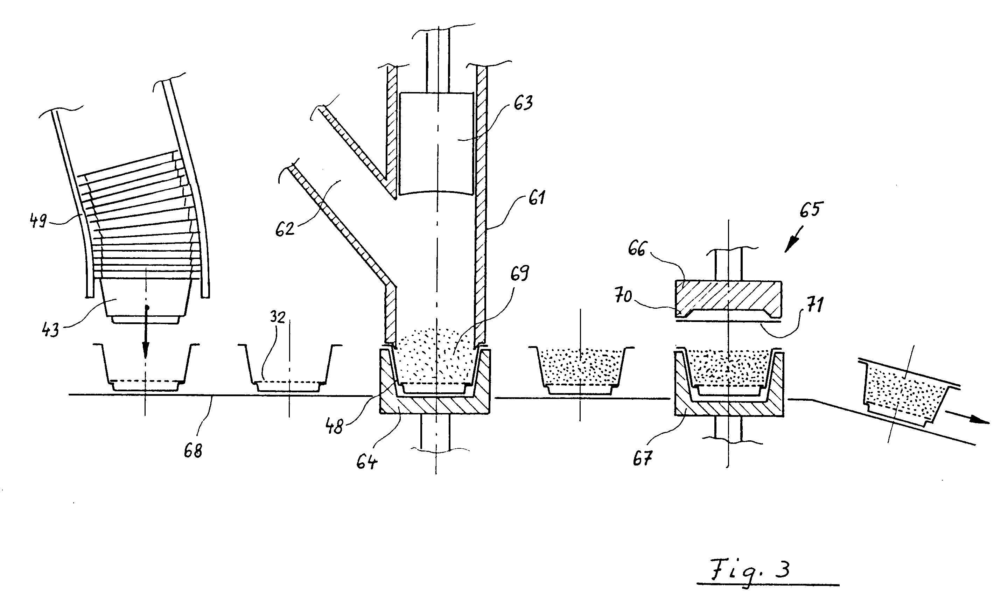

Les Fig. 2 et 3 montrent le dispositif de fabrication des cartouches. Il faut d'abord envisager la fabrication des filtres (32) avec le dispositif (31) comprenant un rouleau de feuille d'aluminium ou de plastique (33) disposé sur un tambour (35). La feuille d'aluminium (36) passe entre une tête de perçage (37) et une matrice (38) et un outil de découpe (39) et une matrice (40). Le reste de la feuille d'aluminium est bobiné sur l'arbre (41) sous la forme de bobine (34) après passage sur le rouleau de renvoi (42). Le dispositif de pose du filtre (32) comprend un chargeur (44∼ de coupelles (43) déposant lesdites coupelles sur un système d'avance pas à pas (45) (non représenté), une presse de pliage (46) avec sa matrice support (47), l'outil de découpe (39) utilisable également comme système de pose et de soudage du filtre (32) avec sa matrice support (48) et finalement le chargeur (49) de récipients (43) avec filtre comportant un piston (50).

Le fonctionnement de ce dispositif est le suivant :

Le chargeur (44) dépose les coupelles (43), les unes après les autres, dans le système d'avance pas à pas (45). La coupelle arrive dans la matrice de support (47) qui remonte dans le sens de la flèche (51) et la presse de pliage (46) descend dans le sens de la flèche (52) pour plier le cordon annulaire (53) sur la coupelle. La coupelle est dégagée par remontée de la presse de pliage (46) et descente de la matrice support (47). La coupelle est mue vers l'outil de pose et soudage (39) du filtre. Il faut voir avant la fabrication du filtre (32). Le tambour (35) dévide la feuille d'aluminium (36) dans le sens de la flèche (54). La tête de perçage (37) avec les aiguilles (55) montent dans le sens de la flèche (56) et la matrice (38) avec alésages (57) descend dans le sens de la flèche (58) pour percer la feuille (36). Le filtre ainsi formé sur la feuille avance jusqu'au système de découpe (39). La précision de centrage des trous percés par rapport à l'outil de découpe (39) est garantie par un système d'avance, comportant un système de détection connu en soi, par exemple un système de cellule photoélectrique (non représenté). La découpe du filtre est faite par descente de l'élément (39) dans le sens de la flèche (59) jusqu'à la matrice fixe (40). L'élément de découpe (39) descend le filtre, le pose dans la coupelle et comporte un système de chauffage annulaire permettant le soudage dudit filtre dans le fond de la coupelle. Après découpe du filtre, le reste de la feuille d'aluminium est bobiné sur l'arbre (41). La coupelle avec filtre quant à elle est amenée dans le chargeur (49) par montée du piston (50) dans le sens de la flèche (60).

Le système de dosage du café (61) (Fig. 3) comprend un canal (62) d'arrivée du café torréfié et moulu, un système de tassage (63) ainsi qu'un support (64). La station d'operculage (65) comprend une tête de soudage (66) et un support (67).

Le système fonctionne de la manière suivante :

Le chargeur (49) dépose dans le système d'avance pas à pas (68) les coupelles (43) avec leur filtre (32). Le support (64) monte et le système de dosage de café (61) descend pour emprisonner la coupelle (48). Le café (69) est dosé par le canal (62) et le système de tassage (63) descend de manière à ce que le café affleure au niveau du rebord supérieur de la coupelle. La capsule chargée est libérée et arrive sur la station d'operculage où elle est emprisonnée entre la tête de soudage (66) et le support (67). L'opercule (71) est soudé sur le rebord supérieur de la capsule grâce au chauffage annulaire (70) de la tête de soudage (66). La cartouche est ensuite libérée et est emmenée jusqu'au poste de conditionnement où elle est emballée.

## Revendications

1. Cartouche fermée, contenant une substance prévue pour être extraite sous pression pour la préparation d'une boisson, comprenant une coupelle (2) avec paroi latérale ayant sensiblement la forme d'un tronc de cône, avec une face inférieure plane (7) avec épaulement (9) et avec un rebord supérieur (6) de diamètre supérieur à la face inférieure, un filtre (4) soudé sur l'épaulement (9) de la face inférieure (7) et décollé de ladite face inférieure et un opercule (3) soudé sur le rebord supérieur (6) de la coupelle, caractérisé en ce que le rebord supérieur de la coupelle a un diamètre supérieur à celui de l'opercule (3), la partie du rebord qui dépasse radialement du rebord de l'opercule étant rabattue vers le bas pour former un cordon annulaire.

2. Cartouche selon la revendication 1, caractérisée en ce qu'elle est en aluminium ou en plastique.

3. Cartouche selon la revendication 2, caractérisée en ce que la coupelle en aluminium a une épaisseur comprise entre 50 et 120 µm et la coupelle en plastique une épaisseur comprise entre 300 et 500 µm.

4. Cartouche selon l'une des revendications 1 à 4, caractérisée en ce qu'elle a un diamètre compris entre 2,5 et 6 cm et une hauteur comprise entre 10 et 25 mm.

5. Procédé de fabrication de cartouche selon l'une des revendications 1 à 4, caractérisé en ce qu'on dépose et soude le filtre (4) sur l'épaulement (9) de la face inférieure de la coupelle dont le rebord supérieur a un diamètre supérieur à celui de l'opercule (3), la partie du rebord qui dépasse radialement du diamètre de l'opercule étant rabattue vers le bas, on remplit la coupelle de café torréfié moulu, on le tasse et on soude l'opercule (3) sur le rebord supérieur (6) de ladite coupelle.

6. Procédé selon la revendication 5, caractérisé en ce qu'on prépare le filtre par perçage des trous sur une bande défilante d'aluminium ou de plastique, puis on découpe le filtre à partir de ladite bande.

7. Procédé selon l'une des revendications 6 ou 7, caractérisé en ce qu'on remplit la coupelle de café sous atmosphère d'azote ou de CO₂.

8. Dispositif pour la mise en oeuvre du procédé selon l'une quelconque des revendications 6 à 8, caractérisé en ce qu'il comprend un outil de perçage (37) et un outil de découpe (39) du filtre à partir d'une bande d'aluminium, ledit outil de découpe servant aussi pour la pose et le soudage du filtre sur l'épaulement de la paroi inférieure de la coupelle défilant directement en-dessous dudit outil de découpe, un poste de dosage et de tassage (61) du café torréfié et moulu, un poste de soudage (66) de l'opercule sur la face supérieure de la coupelle qui a un diamètre supérieur à celui de l'opercule, et en amont de l'outil de soudage du filtre, un système de pliage (46) du cordon annulaire sur la partie du rebord de la coupelle qui dépasse radialement du rebord de l'opercule.

9. Dispositif selon la revendication 9, caractérisé en ce que la coupelle est mue par un système pas à pas.

## Claims

1. Closed cartridge, containing a substance designed to be extracted under pressure for the preparation of a beverage, comprising a cup (2) with a lateral wall substantially frustroconical in shape, with a plane lower face (7) with a shoulder (9) and with an upper flange (6) having a diameter greater than the lower face, a filter (4) welded to the shoulder (9) of the lower face (7) and detached from the said lower face and a lid (3) welded to the upper flange (6) of the cup, characterized in that the upper flange of the cup has a larger diameter than that of the lid (3), the part of the flange which radially overlaps the rim of the lid being turned over downwards to form an annular bead.

2. Cartridge according to claim 1, characterized in that it is made of aluminium or plastic.

3. Cartridge according to claim 2, characterized in that the aluminium cup has a thickness of between 50 and 120 µm and the plastic cup has a thickness of between 300 and 500 µm.

4. Cartridge according to one of claims 1 to 3, characterized in that it has a diameter of between 2.5 and 6 cm and a height of between 10 and 25 mm.

5. Process for manufacturing a cartridge according to one of claims 1 to 4, characterized in that the filter (4) is deposited on and welded to the shoulder (9) of the lower face of the cup, the upper flange of which has a diameter greater than that of the lid (3), the part of the flange which radially overlaps the diameter of the lid being turned over downwards, the cup is filled with ground, roasted coffee, it is tamped and the lid (3) is welded to the upper flange (6) of the said cup.

6. Process according to claim 5, characterized in that the filter is prepared by piercing holes in a moving strip of aluminium or plastic and the filter is then cut out from the said strip.

7. Process according to either of claims 6 or 7, characterized in that the cup is filled with coffee under an atmosphere of nitrogen or of CO₂.

8. Device for carrying out the process according to any one of claims 6 to 8, characterized in that it comprises a piercing tool (37) and a tool (39) for cutting out the filter from an aluminium strip, the said cutting tool also being used for fitting and welding the filter onto the shoulder of the lower wall of the cup passing directly below the said cutting tool, a dosing and tamping station (61) for the ground, roasted coffee, a station (66) for welding the lid to the upper face of the cup which has a diameter greater than that of the lid, and upstream from the tool for welding the filter, a system (46) for folding the annular bead on the part of the flange of the cup which radially overlaps the rim of the lid.

9. Device according to claim 9, characterized in that the cup is moved by a stepwise system.

## Patentansprüche

1. Geschlossene Portionspackung, die eine Substanz enthält, die für die Zubereitung eines Getränks unter Druck extrahiert werden soll, umfassend eine Schale (2) mit einer im wesentlichen kegelstumpfförmigen Seitenwand, mit einer ebenen Unterseite (7) mit einer Schulter (9) und mit einem oberen Rand (6), der einen größeren Durchmesser als die Unterseite hat, ein an die Schulter (9) der Unterseite (7) angeschweißtes und von dieser Unterseite abgehobenes Filter (4) und einen an dem oberen Rand (6) der Schale angeschweißten Deckel (3), dadurch gekennzeichnet, daß der obere Rand der Schale einen größeren Durchmesser als der Deckel (3) hat, wobei der Teil des Rand, der den Rand des Deckels radial überragt, zur Bildung eines ringförmigen Wulstes nach unten umgeschlagen ist.

2. Portionspackung nach Anspruch 1, dadurch gekennzeichnet, daß sie aus Aluminium oder aus Kunststoff besteht.

3. Portionspackung nach Anspruch 2, dadurch gekennzeichnet, daß die Schale aus Aluminium eine Dicke von 50 bis 120 µm und die Schale aus Plastik eine Dicke von 300 bis 500 µm hat.

4. Portionspackung nach einem der Ansprüche 1 bis 4, dadurch gekennzeichnet, daß sie einen Durchmesser von 2,5 bis 6 cm und eine Höhe von 10 bis 25 mm hat.

5. Verfahren zur Herstellung der Portionspackung nach einem der Ansprüche 1 bis 4, dadurch gekennzeichnet, daß man das Filter (4) auf der Schulter (9) der Unterseite der Schale auflegt und anschweißt, deren oberer Rand einen größeren Durchmesser als der Deckel (3) hat, wobei der Teil des Randes, der den Durchmesser des Deckels radial überragt, nach unten umgeschlagen ist, man die Schale mit gemahlenem und geröstetem Kaffee füllt, ihn stampft und den Deckel (3) auf dem oberen Rand (6) dieser Schale anschweißt.

6. Verfahren nach Anspruch 5, dadurch gekennzeichnet, daß man das Filter durch Herstellen von Löchern auf einem sich vorbeibewegenden Aluminium- oder Kunststoffband herstellt und dann das Filter aus diesem Band ausstanzt.

7. Verfahren nach einem der Ansprüche 6 oder 7, dadurch gekennzeichnet, daß man die Schale unter einer Stickstoff- oder CO₂-Atmosphäre mit Kaffee füllt.

8. Vorrichtung zur Durchführung des Verfahrens nach einem der Ansprüche 6 bis 8, dadurch gekennzeichnet, daß sie umfaßt: ein Werkzeug (37) zum Perforieren und ein Werkzeug (39) zum Ausstanzen des Filters aus einem Aluminiumband, wobei das Stanzwerkzeug auch zum Auflegen und zum Anschweißen des Filters auf der Schulter der unteren Wand der sich direkt unter diesem Stanzwerkzeug vorbeibewegenden Schale dient, eine Einrichtung (61) zum Dosieren und Stampfen des gerösteten und gemahlenen Kaffees, eine Einrichtung (66) zum Anschweißen des Deckels auf der Oberseite der Schale, die einen größeren Durchmesser als der Deckel hat, und vor dem Werkzeug zum Anschweißen des Filters ein System (46) zum Biegen des ringförmigen Wulstes auf dem den Rand des Deckels radial überragenden Rand der Schale.

9. Vorrichtung nach Anspruch 9, dadurch gekennzeichnet, daß die Schale durch ein Schrittsystem bewegt ist.
